# EUROPÄISCHE PATENTSCHRIFT

(11) **EP 0 283 640 B1**
(45) Veröffentlichungstag und Bekanntmachung des Hinweises auf die Patenterteilung: **23.02.1994**
(21) Anmeldenummer: 88100365.1
(22) Anmeldetag: 13.01.1988
(51) Int. Cl.: A47J 37/08, G01J 5/06

(54) **Temperaturmessvorrichtung**
Temperature measuring device
Dispositif de mesure de la température

(30) Priorität: 24.03.1987 DE 3709571
(43) Veröffentlichungstag der Anmeldung: 28.09.1988
(73) Patentinhaber: Braun Aktiengesellschaft, Frankfurt am Main (DE)
(72) Erfinder: Möthrath, Georg, D-6467 Hasselroth (DE); Schamberg, Stefan, D-6370 Oberursel (DE)

(56) Entgegenhaltungen:
- EP-A- 0 201 818
- DD-A- 218 454
- DE-A- 3 424 585
- GB-A- 2 179 732
- GB-A- 2 179 843

## Beschreibung

Die Erfindung betrifft eine Temperaturmeßvorrichtung für einen Brotröster nach dem Oberbegriff des Patentanspruchs 1.

Eine derartige Temperaturmeßvorrichtung ist aus der DE-AS 15 15 042 bekannt. Die bekannte Temperaturmeßvorrichtung weist eine rohrförmige Strahlungsleiteinrichtung auf, die einen Führungskanal für einen Teil der von dem Meßgut emittierte Wärmestrahlung bildet. Der zur Messung verwendete Anteil der Wärmestrahlung trifft über eine Eintrittsöffnung, die auf das Meßgut gerichtet ist, in den Strahlenführungskanal ein und wird durch diesen auf ein wärmeempfindliches Sensorelement geführt, das im Strahlenführungskanal angeordnet ist. Dabei wird die von dem Meßgut - in diesem Fall dem Röstgut - emittierte und zu dem Sensorelement geführte Wärmestrahlung zur Bestimmung der Oberflächentemperatur des Meßgutes verwendet. Ein direkter Kontakt zwischen Sensorelement und Oberfläche des Röstgutes ist dabei nicht erforderlich.

Die bekannte Temperaturmeßvorrichtung weist jedoch den Nachteil auf, daß sich die Wände des rohrförmigen Strahlenführungskanals, und damit die eingeschlossene Luft und durch Wärmeleitung auch der am Ende des Strahlenführungskanals installierte Sensor mit der Häufigkeit der Meßvorgänge aufheizen, wodurch das Meßergebnis verfälscht wird. Dementsprechend verschlechtert sich die Meßgenauigkeit der bekannten Temperaturmeßvorrichtung mit der Häufigkeit der aufeinanderfolgenden Meßvorgänge und dies insbesondere dann, wenn diese in relativ kurzen Abständen aufeinander folgen.

Aus der GB-A-2 179 843 A ist ein elektrisch beheizter sogenannter Kleingrill (englisch "toaster oven") bekannt, mit dem zum einen auch Brot geröstet zum anderen aber auch Nahrungsmittel, wie z.B. komplette Sandwiches, überbacken werden können. Zur Steuerung der Einschaltdauer der elektrischen Heizung - und zwar unabhängig davon, ob der Kleingrill als reiner Brotröster oder zum Überbacken eines Gutes verwendet wird - weist der Kleingrill anstelle eines einzigen infrarot-empfindlichen Sensorelements deren zwei auf. Eines der beiden Sensorelemente ist dabei wiederum gegenüber der Austrittsöffnung eines Strahlenführungskanals angeordnet, während das andere gleich aufgebaute Sensorelement in unmittelbarer Nähe zum ersten Sensorelement angebracht ist, ohne aber von der vom Röst- oder Backgut ausgehenden Infrarotstrahlung getroffen zu werden. Durch Auswertung der Differenz der von beiden Sensorelementen abgegebenen elektrischen Signale ist es als Kriterium zur Steuerung der Heizeinrichtung möglich, unabhängig von der Anzahl der vorhergehenden Röst- oder Backvorgänge alleine auf die vom Backgut ausgehende Infrarotstrahlung abzustellen. Wesentlicher Nachteil des aus der GB-A-2 179 843 A bekannten Kleingrills ist die Tatsache, daß zwei infrarot-empfindliche Sensorelement benötigt werden, daß weiter die elektrische Auswerteschaltung aufwendiger wird, was insgesamt die Herstellung einer derartigen Temperaturmeßvorrichtung verteuert.

Daher liegt der Erfindung die Aufgabe zugrunde, eine Temperaturmeßvorrichtung für Brotröster zu schaffen, deren Meßgenauigkeit auch noch nach mehreren Meßvorgängen ausreichend genau ist und die dennoch mit geringem Schaltaufwand realisierbar ist.

Die Aufgabe der Erfindung wird für eine Temperaturmeßvorrichtung nach dem Oberbegriff des Patentanspruchs 1 durch die im kennzeichnenden Teil dieses Patentanspruchs angegebenen Merkmale gelöst.

Nach der Erfindung wird der Strahlenführungskanal aus einer Reihe von Durchtrittsöffnungen gebildet, die auf einer Achse liegend auf mit Abstand hintereinander angeordneten Trennwänden angebracht sind. Folglich besteht der Strahlenführungskanal aus keinem durchgehenden, rohrförmigen Körper, der Wärmeenergie durch Wärmeleitung zu dem Sensorelement transportiert. Vielmehr sind zwischen den einzelnen Trennwänden Luft enthaltende Zwischenräume ausgebildet, die als Wärmeleitsperren dienen. Ebenso wirken die einzelnen Trennwände als Schirme gegen störende Wärmestrahlung, d.h., daß jeweils die in Richtung des Sensorelements nachfolgende Trennwand für die vorgelagerte, heißere Trennwand als Wärmeschutzschirm wirkt.

Weiter wird durch die Temperaturmeßvorrichtung nach der Erfindung der Vorteil erzielt, daß zwischen den einzelnen Trennwänden ein kühlender Luftstrom fließt, der eine Überlagerung der vom Meßgut ausgehenden Infrarotstrahlung durch Störstrahlung weitgehend unterbindet. Der durch den Luftstrom bedingte Luftaustausch ist für das Sensorelement von besonderem Vorteil, da sich andernfalls die das Sensorelement umgebende, ruhende Luftmenge und dadurch auch das Sensorelement selbst allmählich erwärmt, was zur Folge hätte, daß das Meßergebnis bei nacheinander durchgeführten Röstvorgängen zunehmend verfälscht wird.

Nach einer Weiterbildung der Erfindung (Anspruch 2) sind die Ränder der Bohrungen der Trennwände mit Materialien überzogen, die ein geringes Emissionsvermögen aufweisen. Der Überzug bietet den Vorteil, daß dann, wenn die Trennwände aus konstruktiven Gründen aus solchen Materialien - z.B. Kunststoff - bestehen, die ein hohes Emissionsvermögen aufweisen, das Emissionsvermögen der Bohrung und deren Randbereiche herabgesetzt wird. Durch den Überzug kann daher in vorteilhafter Weise erreicht werden, daß der von den Rändern der Durchtrittsöffnungen direkt in den Strahlenführungskanal abgebenene Anteil an Störstrahlung vermindert wird.

Die Durchtrittsöffnungen können aber auch mit Blenden (Anspruch 3) versehen werden, die aus einem Material mit geringem Emissionsversmögen bestehen, wozu sich aufgrund seines sehr geringen Emissionsvermögens poliertes Nickel eignet (Anspruch 4). Weitere vorteilhafte Weiterbildungen der Erfindung sind anderen Unteransprüchen zu entnehmen.

Nachfolgend wird die Erfindung anhand der Zeichnungen näher erläutert. Es zeigen:
- Fig. 1: einen Schnitt durch einen Brotröster, der beispielhaft die Anwendung der Temperaturmeßvorrichtung nach der Erfindung verdeutlicht;
- Fig. 2: eine schematische Darstellung der Temperaturmeßvorrichtung nach der Erfindung mit zusätzlich angebrachten, unterschiedlich ausgeführten Blenden;
- Fig. 3: eine Draufsicht auf eine Trennwand entsprechend der Schnittlinie A-A in Fig. 2, und
- Fig. 4: einen Schnitt durch einen Brotröster gemäß Fig. 1, bei dem der Strahlungsführungskanal mit Hilfe von Spiegeln umgelenkt wird.

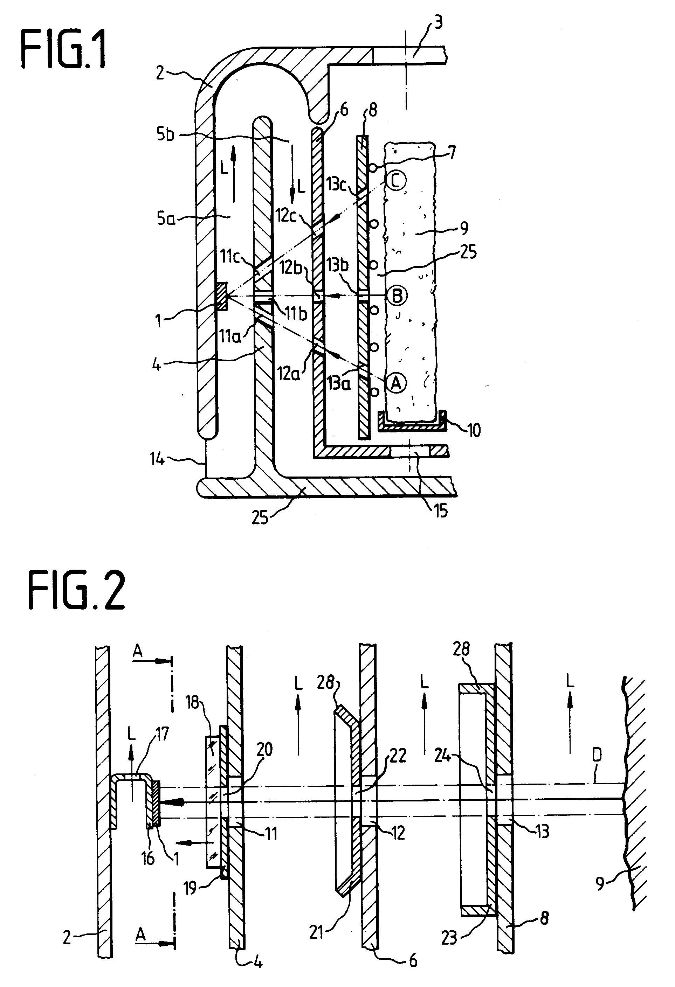

Fig. 1 zeigt beispielhaft die Anwendung der Temperaturmeßvorrichtung nach der Erfindung in einem Brotröster. Der Brotröster ist im Schnitt und nur teilweise dargestellt. Zur Kühlung der Außenwände des Brotrösters sind auf der Innenseite der äußeren Gehäusewände Strömungskanäle ausgebildet. Ein für Wärmestrahlung empfindliches Sensorelement 1 ist an der Innenseite der äußeren Gehäusewand 2 des Brotrösters angebracht. Ausgehend von dem Sensorelement 1 sind in Richtung des Meßgutes 9 - z.B. einer Toastscheibe - weitere Trennwände vorgesehen. Die erste Trennwand 4 bildet mit der äußeren Gehäusewand 2 einen aufsteigenden Strömungskanal 5a für einen Luftstrom L, der über eine Lufteintrittsöffnung 14 im Bodenbereich des Brotrösters eintritt. Ferner bildet die erste Trennwand 4 mit einer zweiten Trennwand 6 den absteigenden Strömungskanal 5b für den Luftstrom L. In bekannter Weise besteht die zweite Trennwand 6 vorzugsweise aus einem Blech. Weiter folgt auf die zweite Trennwand 6 eine als Isolierstoffträger dienende weitere Trennwand 8, auf der Heizleiter 7 für die Brotrösterheizung befestigt sind. Die Heizleiter 7 sind auf das in einer Röstkammer 25 sich befindende Röstgut gerichtet. Zur Ein-/und Ausführung des Röstgutes 9 ist an der Oberseite des Brotrösters eine Ein-/Ausgabeöffnung 3 und im Inneren des Brotrösters ein Röstgutschlitten 10 vorgesehen. Der in dem Strömungskanal 5a, 5b strömende Luftstrom L tritt an einer am Fuß der Trennwand 6 angebrachten Austrittsöffnung 15 in die Röstkammer 25 ein.

In den Trennwänden 4, 6 und 8 sind jeweils drei zusätzlich mit den Kleinbuchstaben a, b und c bezeichnete, als Bohrungen ausgebildete Durchtrittsöffnungen 11, 12 und 13 vorgesehen, wobei alle mit dem gleichen Kleinbuchstaben bezeichneten Bohrungen auf einer Geraden liegen. Dementsprechend bilden z. B. die drei Bohrungen 11a, 12a, 13a einen Strahlenführungskanal, der sich ausgehend von der Oberfläche des Röstgutes im Punkt "A" zu dem wärmeempfindlichen Sensorelement 1 geradlinig erstreckt. Ebenso sind in dem Ausführungsbeispiel nach Fig. 1 zwei weitere Strahlenführungskanäle vorgesehen, die sich entsprechend den Kleinbuchstaben "b" und "c" von den Oberflächenpunkten "B" und "C" von der Oberfläche des Röstgutes zu dem wärmeempfindlichen Sensorelement 1 erstrecken. Zur besseren Unterscheidung sind die drei Strahlenführungskanäle mit einer unterschiedlichen Anzahl von Punkten strichpunktiert dargestellt. Wie weiter aus Fig. 1 zu erkennen ist, verlaufen die drei Strahlenführungskanäle unter verschiedenen Winkeln zu dem Sensorelement. Folglich detektiert der erste Strahlenführungskanal (mit einem Punkt in der strichpunktierten Linie dargestellt) den unteren Bereich der Oberfläche des Röstgutes (Punkt "A"). Der mittlere Strahlenführungskanal (mit zwei Punkten strichpunktiert dargestellt) detektiert den Mittelbereich des Röstgutes 9 (Punkt "B"), während der obere Strahlenführungskanal (mit drei Punkten strichpunktiert dargestellt) den oberen Bereich (Punkt "C") des Röstgutes 9 detektiert. Abweichend von diesem Ausführungsbeispiel ist es möglich, statt des einen Sensorelementes 1 für die drei Strahlenführungskanäle drei Sensorelemente vorzusehen. In diesem Fall können die Strahlenführungskanäle beispielsweise parallel zueinander verlaufen.

Wird die Heizung des Brotrösters in Betrieb gesetzt, weist der Heizleiter 7 nach Abschluß der Aufheizphase beispielsweise eine Temperatur von 900°C auf. Die hohe Temperatur der Brotrösterheizung und die damit verbundene ausgesandte Wärmestrahlung bewirkt, daß die Oberflächentemperatur des Röstgutes auf Werte zwischen 100°C und 200°C ansteigt und dabei das Röstgut in bekannter Weise auf seiner Oberfläche karamelisiert wird. Da das Röstgut ein großes Emissionsvermögen aufweist, wirkt die Oberfläche des Röstgutes als Wärmestrahler. Diese Wärmestrahlung gelangt durch die drei zuvor beschriebenen Strahlenführungskanäle zu dem Sensorelement 1. Da die Intensität der Wärmestrahlung mit zunehmendem Röstgrad ebenfalls zunimmt, läßt sich eindeutig feststellen, wann der eingestellte und gewünschte Röstgrad erreicht ist. Infolge des geringen Reflexionsvermögens des Röstgutes gelangt relativ wenig Wärmestrahlung, die von der Heizung des Brotrösters herrührt, durch Reflexion an der Oberfläche des Röstgutes in die Strahlenführungskanäle.

Ebenso wirkt die den Isolierstoff tragende Trennwand 8 als Wärmeschutzschirm, so daß sich relativ wenig von der Heizung herrührende Wärmestrahlung in Richtung des Sensorelementes 1 ausbreiten kann. Hinsichtlich der von der Trennwand 8 in Richtung auf das Sensorelement 1 abgestrahlten Wärmestrahlung wirkt die Trennwand 6 als erster Wärmeschutzschirm. Für die von der Trennwand 6 in Richtung des Sensorelements 1 abgestrahlte Wärmestrahlung wirkt die Trennwand 4 wiederum als weiterer Wärmeschutzschirm.

Da sich zwischen den einzelnen Trennwänden 4, 6, 8 ein Luftstrom einstellt, der als Wärmeleitsperre wirkt, wird auch die Wärmeleitung in Richtung auf das Sensorelement 1 weitgehend unterbunden. Wie in Fig. 1 durch den Luftstrom L angedeutet, strömt die Luft vorzugsweise zwischen den einzelnen Trennwänden. Dabei nimmt die Trennwand 4 auch nach längerem Betrieb mit einer Heizleitertemperatur von etwa 900°C nur eine Temperatur von 50 - 70°C und die Gehäusewand 2 eine Temperatur von 20 - 30°C an. Durch den Verlauf des Luftstroms L ergibt sich der weitere Vorteil, daß auch das Sensorelement 1 selbst gekühlt wird und sich dadurch auf etwa konstanter Betriebstemperatur befindet.

Obwohl die soweit beschriebene Temperaturmeßvorrichtung zur Verdeutlichung der Funktionsweise beispielhaft im Zusammenhang mit einem Brotröster beschrieben ist, kann diese Temperaturmeßvorrichtung auch in anderen Geräten angewendet werden. So läßt sich z.B. die erfindungsgemäße Temperaturmeßvorrichtung auch zur Bestimmung der Wicklungstemperatur von Elektromotoren verwenden.

Fig. 2 zeigt eine schematische Darstellung der Temperaturmeßvorrichtung nach der Erfindung mit nachfolgend beschriebenen Blenden. Wie bei dem in Fig. 1 beschriebenen Brotröster ist die Anzahl der Trennwände bzw. Gehäusewände nicht auf die dargestellte Anzahl beschränkt.

Für den Fall, daß die Trennwände 4, 6, 8 beispielsweise aus Kunststoff bestehen, weisen diese ein hohes Emissionsvermögen auf. Dieses hohe Emissionsvermögen kann dazu führen, daß die Trennwände besonders im Bereich der Bohrungen eine Störstrahlung in den mit "D" bezeichneten Strahlenführungskanal (strichpunktiert dargestellt) einschleusen. Aus diesem Grund sind vorzugsweise die Randbereiche der Bohrungen 11, 12, 13 in den Trennwänden 4, 6, 8, die den Strahlenführungskanal D bilden, mit einem Material verblendet, das ein geringes Emissionsvermögen aufweist. Hierzu ist beispielsweise an der Trennwand 4 im Bereich der Bohrung 11 eine ringförmige Blende 19, deren Oberfläche aus poliertem Nickel besteht, aufgebracht.

Das Befestigen der Blenden kann beispielsweise über Verkleben, Vernieten, usw. erfolgen. Wie aus Fig. 2 ersichtlich, erstreckt sich der Strahlenführungskanal D von dem Meßgut 9 zu dem Sensor 1 und alle Blenden 19, 21, 23 sind auf der zum Sensor 1 gerichteten Seite der Trennwände 4, 6, 8 ausgebildet. Abweichend von dem in Fig. 2 gezeigten Ausführungsbeispiel können die Blenden 19, 21, 23 beidseitig und den Rand der Bohrungen 11, 12, 13 in den Trennwänden 4, 6, 8 einfassend und auskleidend befestigt sein. Vorzugsweise sind die Flächen der Blendenöffnungen 20, 22, 24 der Blenden 19, 21, 23 kleiner als die Bohrungen 11, 12, 13 in den Trennwänden 4, 6, 8, um sicherzustellen, daß die Ränder der Bohrungen 11, 12, 13 in Richtung auf das Sensorelement 1 abgeschirmt sind. Abweichend von Fig. 2 ist es auch möglich, die Flächen der Bohrungen 11, 12, 13 z.B. in Richtung auf das Sensorelement 1 kleiner werdend auszugestalten und damit für die Bohrungen 11, 12, 13 in den Trennwänden 4, 6, 8 keine gleichen Flächen vorzusehen.

Vorzugsweise sind die Bohrungen 13 in der Trennwand 8 so ausgebildet, daß die Heizelemente 7 in Richtung Sensorelement 1 noch von der Trennwand 8 abgeschirmt sind. Zur Erzielung eines größtmöglichen Signals werden die Bohrungen in den Trennwänden 4, 6 und 8 vorzugsweise so ausgebildet, daß der Empfindlichkeit des Sensorelements 1 in Abhängigkeit vom Einfallswinkel der Wärmestrahlung Rechnung getragen wird.

Die Blenden 21, 23 unterscheiden sich von der Blende 19 darin, daß deren Rand 28 von der Trennwand abhebend vorgewölbt ist, um die Abschirmwirkung zu erhöhen. Der gewölbte Rand 28 der Blenden 21 und 23 kann auch dazu dienen, ein Filter 18 einzufassen und zu halten, das in Fig. 2 beispielhaft auf die Blende 19 aufgeklebt ist. Das Filter 18 ist so beschaffen, daß es die von den Heizelementen 7 in den Strahlenführungskanal D emittierte Wärmestrahlung reflektiert, während die vom Röstgut emittierte Strahlung durchgelassen wird. Beispielsweise wird das Filter 18 so ausgebildet, daß es Wärmestrahlung der Wellenlängen λ > 7 µm transmittiert und Wärmestrahlung der Wellenlängen λ < 7 µm reflektiert. Dies stellt insofern einen guten Kompromiß dar, als einerseits die von den eine Temperatur von etwa 900°C aufweisenden Heizleitern abgegebene Strahlung (das Maximum der Strahlungsleistung liegt bei etwa 2,5 µm) weitgehend ausgefiltert wird und andererseits die vom Röstgut ausgehende Strahlung (bei 200°C liegt das Maximum der Strahlungsleistung bei etwa 6 µm) ausreichend durchgelassen wird. Das Filter 18 darf im gesamten relevanten Wellenlängenspektrum nur ein sehr geringes Absorptionsvermögen haben, da ansonsten durch die infolge absorbierter Wärmestrahlung eintretende Temperaturerhöhung eine direkt auf das Sensorelement 1 wirkende Störstrahlung entstehen würde.

Ebenso wie in Fig. 1 kann zwischen den einzelnen Trennwänden 4, 6, 8 ein Luftstrom L strömen, der einen Wärmestau verhindert und in Fig. 2 in allen Zwischenräumen beispielhaft in eine Richtung strömt. Dieser Luftstrom L kann auch dazu dienen, daß das Sensorelement 1, das in dem Zwischenraum zwischen der Gehäusewand 2 und der Trennwand 4 angeordnet ist, gekühlt wird.

In Fig. 2 ist das Sensorelement 1 nicht direkt an der Innenseite der Gehäusewand 2 angeordnet, sondern wird durch einen Halter 16 getragen. Zur Vermeidung eines Wärmestaus kann der Halter 16, der z. B. U-förmig ist, wie in Fig. 2 gezeigt, mit einer Luftdurchtrittsbohrung 17 versehen sein, so daß er vom Luftstrom L durchströmt werden kann.

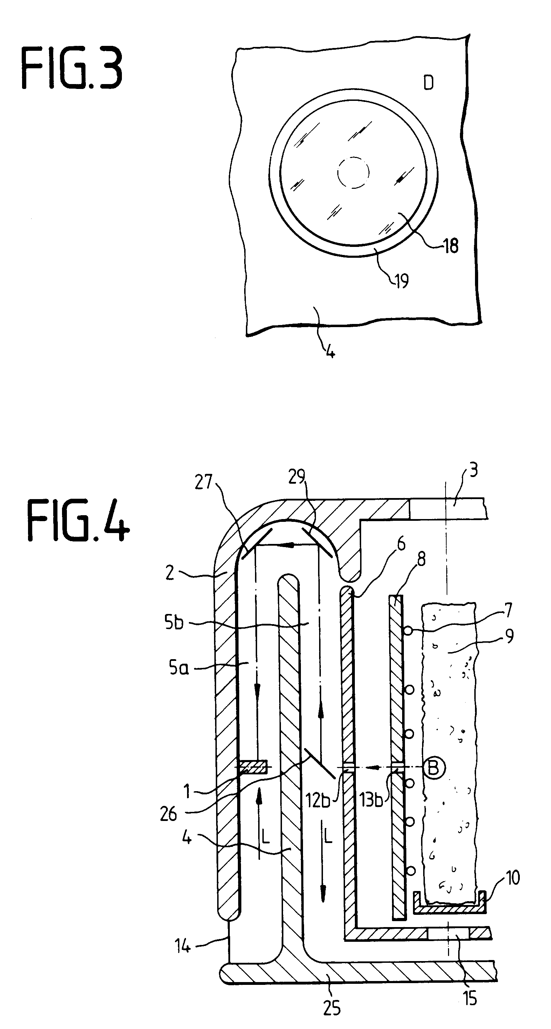

Fig. 3 zeigt eine Draufsicht auf die Trennwand 4 aus Fig. 2 entlang der Schnittlinie A-A. Die Trennwand 4 ist nur als Ausschnitt dargestellt und, wie in Fig. 3 zu erkennen, sind der Strahlenführungskanal D, das Filter 18 und die Blende 19 rund ausgebildet. Je nach Empfindlichkeit des Sensorelements in Abhängigkeit vom Einfallswinkel der auf ihn auftreffenden Wärmestrahlung kann der rund ausgeführte Strahlenführungskanal D auch eine andere Form aufweisen.

Die zuvor beschriebenen Ausführungsbeispiele zeigen Trennwände 4, 6, 8, die eben sind, jedoch sind auch Ausführungsbeispiele möglich, bei denen die Trennwände 4, 6, 8 beispielsweise in Richtung auf das Röstgut 9 konkav gewölbt sind.

Ebenso wurde in den beschriebenen Ausführungsbeispielen beispielhaft davon ausgegangen, daß der Strahlenführungskanal D von dem Röstgut 9 zu dem Sensorelement 1 geradlinig verläuft, wobei die Bohrungen 13 die Strahleneintrittsöffnung und die Bohrungen 11 der Trennwand bzw. die Blendenöffnung 20 der Blende 19 die Strahlenaustrittsöffnung des Strahlenführungskanals D bilden. Abweichend davon ist es jedoch auch möglich, in einem der Zwischenräume zwischen zwei Trennwänden einen Reflektor vorzusehen, der eine Richtungsänderung des Strahlenführungskanals bewirkt. Dadurch, daß der Strahlenführungskanal D durch einzelne, voneinander getrennte Trennwände 4, 6, 8 mit Bohrungen 11, 12, 13 gebildet wird, ist es äußerst einfach, diese Richtungsänderung vorzunehmen und entsprechende Reflektoren anzubringen. So zeigt Fig. 4 ein Ausführungsbeispiel mit nur einem Strahlenführungskanal, bei dem die Wärmestrahlung nach dem Austritt aus der Trennwand 6 mittels dreier gegen die auftreffende Wärmestrahlung jeweils um 45° Grad geneigten Reflektoren 26, 27 und 29 auf ein Sensorelement 1 gelenkt wird, auf dessen wärmestrahlungsempfindlicher Fläche die umgelenkte Wärmestrahlung senkrecht auftrifft. Zur Bündelung der auf das Sensorelement 1 auftreffenden Wärmestrahlung können anstelle von planen Reflektoren auch hohlspiegelförmig ausgebildete Reflektoren verwendet werden.

## Patentansprüche

1. Temperaturmeßvorrichtung für Brotröster mit einer äußeren Gehäusewand und mit einem Sensorelement, das auf Wärmestrahlung anspricht, und mit mindestens einem Strahlenführungskanal, dessen Strahleneintrittsöffnung auf ein in einer Röstkammer sich befindendes Röstgut und dessen Strahlenaustrittsöffnung auf das Sensorelement gerichtet ist,
**dadurch gekennzeichnet**,
daß der Strahlenführungskanal (A, B, C, D) durch mehrere auf einer Achse liegende Durchtrittsöffnungen (11, 12, 13) gebildet wird, die an mit Abstand hintereinander im Inneren des Brotrösters angeordneten Trennwänden (4, 6, 8) ausgebildet sind, daß die äußere Gehäusewand (2) des Brotrösters und eine erste (4) und zweite (6 oder 8) Trennwand so angeordnet sind, daß sowohl zwischen der äußeren Gehäusewand (2) und der ersten Trennwand (4) als auch zwischen erster (4) und zweiter (6 oder 8) Trennwand ein Strömungskanal (5a, 5b) für einen kühlenden Luftstrom (L) gebildet wird, der über die äußere Gehäusewand (2) in das Innere des Brotrösters eintritt und daß das Sensorelement (1) im Bereich zwischen der äußeren Gehäusewand (2) und der ersten Trennwand (4) angeordnet ist.

2. Temperaturmeßvorrichtung nach Anspruch 1,
**dadurch gekennzeichnet**,
daß die Durchtrittsöffnungen (11, 12, 13) und deren Randbereiche mit einer Schicht niedrigen Emissionsvermögens überzogen sind.

3. Temperaturmeßvorrichtung nach Anspruch 1,
**dadurch gekennzeichnet**,
daß die Ränder der Durchtrittsöffnungen (11, 12, 13) durch Blenden (19, 21, 23) abgedeckt sind, die ein geringes Emissionsvermögen aufweisen.

4. Temperaturmeßvorrichtung nach Anspruch 3,
**dadurch gekennzeichnet**,
daß die Blenden (19, 21, 23) eine Oberfläche aus poliertem Nickel aufweisen.

5. Temperaturmeßvorrichtung nach Anspruch 3,
**dadurch gekennzeichnet**,
daß die Blenden (19, 21, 23) durch eine Wölbung der Ränder (28) teller- oder topfförmig ausgebildet sind.

6. Temperaturmeßvorrichtung nach Anspruch 3,
**dadurch gekennzeichnet**,
daß die Flächen der Blendenöffnungen (20, 22, 24) der Blenden (19, 21, 23) kleiner als die Flächen der Durchtrittsöffnungen (11, 12, 13) in den Trennwänden (4, 6, 8) sind.

7. Temperaturmeßvorrichtung nach einem der vorgenannten Ansprüche,
**dadurch gekennzeichnet**,
daß die Durchtrittsöffnungen (11, 12, 13) in den Trennwänden (4, 6, 8) durch Filter (18) abgedeckt sind.

8. Temperaturmeßvorrichtung nach Anspruch 1,
**dadurch gekennzeichnet**,
daß eine dritte Trennwand (8) vorgesehen ist, die innerhalb der Röstkammer (25) angeordnet ist und auf deren dem Sensorelement (1) abgewandten Seite Heizleiter (7) für die Brotrösterheizung befestigt sind.

9. Temperaturmeßvorrichtung nach Anspruch 8,
**dadurch gekennzeichnet**
daß der kühlende Luftstrom (L) durch eine im Bodenbereich der äußeren Gehäusewand (2) angebrachte Lufteintrittsöffnung (14) in das Innere des Brotrösters fließt und über eine ebenfalls im Bodenbereich angeordnete Luftraustrittsöffnung (15) in die Röstkammer (25) austritt.

10. Temperaturmeßvorrichtung nach Anspruch 1,
**dadurch gekennzeichnet**,
daß zwischen dem Sensorelement (1) und der ersten Trennwand (4) ein Filter (18) angebracht ist, welches die von den Heizelementen (7) emittierte Strahlung weitgehend reflektiert und die vom Röstgut emittierte Strahlung transmittiert.

11. Temperaturmeßvorrichtung nach Anspruch 1,
**dadurch gekennzeichnet**,
daß in Teilbereichen des Strahlenführungskanals die Wärmestrahlung durch Reflektoren (26, 27, 29) umgelenkt wird.

## Claims

1. A temperature measuring device for bread toasters, with an outer casing wall and a sensing element responsive to heat radiation, and with at least one radiation guide channel whose radiation inlet opening is directed to an article being toasted received in a toasting chamber and whose radiation outlet opening is directed to the sensing element,
**characterized in that** the radiation guide channel (A, B, C, D) is formed by several passageways (11, 12, 13) lying on an axis in spaced-apart serially-disposed partition plates (4, 6, 8) in the interior of the bread toaster, that the outer casing wall (2) of the bread toaster and a first (4) and a second (6 or 8) partition wall are so arranged that a flow channel (5a, 5b) for a cooling air current (L) is formed both between the outer casing wall (2) and the first partition wall (4) and between the first (4) and the second. (6 or 8) partition wall, said air current entering the interior of the bread toaster through the outer casing wall (2), and that the sensing element (1) is arranged in the area between the outer casing wall (2) and the first partition wall (4).

2. The temperature measuring device as claimed in claim 1,
**characterized in that** the passageways (11, 12, 13) and their edge areas are coated with a layer of material having a low emissivity.

3. The temperature measuring device as claimed in claim 1,
**characterized in that** the edges of the passageways (11, 12, 13) are covered by guards (19, 21, 23) having a low emissivity.

4. The temperature measuring device as claimed in claim 3,
**characterized in that** the surface of the guards (19, 21, 23) is of polished nickel.

5. The temperature measuring device as claimed in claim 3,
**characterized in that** the guards (19, 21, 23) are of a dish- or cup-shaped configuration by having their edges (28) curved.

6. The temperature measuring device as claimed in claim 3,
**characterized in that** the areas of the apertures (20, 22, 24) of the guards (19, 21, 23) are smaller than the areas of the passageways (11, 12, 13) in the partition walls (4, 6, 8).

7. The temperature measuring device as claimed in any one of the preceding claims,
**characterized in that** the passageways (11, 12, 13) in the partition walls (4, 6, 8) are covered by filters (18).

8. The temperature measuring device as claimed in claim 1,
**characterized in that** a third partition wall (8) is provided which is arranged within the toasting chamber (25) and has heat conductors (7) for the bread toaster heating unit mounted on its side remote from the sensing element (1).

9. The temperature measuring device as claimed in claim 8,
**characterized in that** the cooling air current (L) enters the interior of the bread toaster through an air inlet Opening (14) provided in the bottom area of the outer casing wall (2), exiting through an air outlet opening (15) equally arranged in the bottom area to enter the toasting chamber (25).

10. The temperature measuring device as claimed in claim 1,
**characterized in that** a filter (18) is provided between the sensing element (1) and the first partition wall (4), said filter largely reflecting the radiation emitted by the heating elements (7) while transmitting the radiation emitted by the item being toasted.

11. The temperature measuring device as claimed in claim 1,
**characterized in that** in partial areas of the radiation guide channel the thermal radiation is deflected by reflectors (26, 27, 29).

## Revendications

1. Dispositif de mesure de température pour grille-pain qui comprend une paroi extérieure de boîtier et un élément détecteur qui réagit au rayonnement thermique, et comprenant au moins un canal de guidage de rayonnement, dont l'ouverture d'entrée est dirigée sur un produit qui se trouve dans la chambre de cuisson et dont l'ouverture de sortie est dirigée vers l'élément détecteur, caractérisé en ce que le canal de guidage de rayonnement (A, B, C, D) est formé par plusieurs ouvertures de passage (11, 12, 13) situées sur un axe et ménagées dans des cloisons de séparation (4, 6, 8) agencées a distance les unes derrière les autres à l'intérieur du grille-pain, en ce que la paroi extérieure du boîtier (2) du grille-pain et une première (4) et une seconde (6 ou 8) cloisons de séparation sont agencées de telle manière qu'il se forme un canal d'écoulement (5a, 5b) pour un courant d'air (L) de refroidissement tant entre la paroi extérieure du boîtier (2) et la première cloison (4) qu'entre la première (4) et la seconde (6 ou 8) cloisons de séparation, ledit courant d'air pénétrant à travers la paroi extérieure du boîtier (2) vers l'intérieur du grille-pain, et en ce que l'élément détecteur (1) est agencé dans la région entre la paroi extérieure de boîtier (2) et la première cloison de séparation (4).

2. Dispositif de mesure de température selon la revendication 1, caractérisé en ce que les ouvertures de passage (11, 12, 13) et leurs zones de bordure sont revêtues avec une couche à faible capacité d'émission.

3. Dispositif de mesure de température selon la revendication 1, caractérisé en ce que les bordures des ouvertures de passage (11, 12, 13) sont recouvertes par des diaphragmes (19, 21, 23) qui présentent une faible capacité d'émission.

4. Dispositif de mesure de température selon la revendication 3, caractérisé en ce que les diaphragmes (19, 21, 23) présentent une surface en nickel poli.

5. Dispositif de mesure de température selon la revendication 3, caractérisé en ce que les diaphragmes (19, 21, 23) sont réalisés en forme d'assiette ou de coupelle par une courbure de leurs bordures.

6. Dispositif de mesure de température selon la revendication 3, caractérise en ce que les surfaces des ouvertures (20, 22, 24) de diaphragmes (19, 21, 23) sont inférieures aux surfaces des ouvertures de passage (11, 12, 13) dans les cloisons de séparation (4, 6, 8).

7. Dispositif de mesure de température selon l'une des revendications précédentes, caractérisé en ce que les ouvertures de passage (11, 12, 13) dans les cloisons de séparation (4, 6,8) sont recouvertes au moyen de filtres (18).

8. Dispositif de mesure de température selon la revendication 1, caractérisé en ce qu'il est prévu une troisième cloison de séparation (8) qui est agencée à l'intérieur de la chambre de cuisson (25), des fils chauffants (7) étant fixés sur la face de ladite cloison de séparation éloignée de l'élément détecteur (1), pour le chauffage du grille-pain.

9. Dispositif de mesure de température selon la revendication 8, caractérisé en ce que le courant d'air (L) de refroidissement s'écoule vers l'intérieur du grille-pain à travers une ouverture d'entrée d'air (14) ménagée dans la région du fond de la paroi extérieure du boîtier (2) et s échappe vers la chambre de cuisson (25) à travers une ouverture de sortie d'air (15) également prévue dans la région du fond.

10. Dispositif de mesure de température selon la revendication 1, caractérisé en ce qu'il comprend un filtre (18) monté entre l'élément détecteur (1) et la première cloison de séparation (4), ledit filtre réfléchissant dans une large mesure le rayonnement émis par les éléments chauffants (7) et transmettant le rayonnement émis par le produit à griller.

11. Dispositif de mesure de température selon la revendication 1, caractérisé en ce que le rayonnement thermique est renvoyé au moyen de réflecteurs (26, 27, 29) dans des régions partielles du canal de guidage de rayonnement.
